# FASCICULE DE BREVET EUROPEEN

(11) **EP 1 133 654 B1**
(45) Date de publication et mention de la délivrance du brevet: **15.10.2003**
(21) Numéro de dépôt: 99972726.6
(22) Date de dépôt: 16.11.1999
(51) Int. Cl.: F16L 33/00, F16L 13/14

(54) **DISPOSITIF DE RACCORDEMENT D'UNE CONDUITE METALLIQUE**
VERBINDUNGSVORRICHTUNG EINER METALLISCHEN ROHRLEITUNG
CONNECTING DEVICE FOR METAL CONDUIT

(30) Priorité: 25.11.1998 FR 9814842
(43) Date de publication de la demande: 19.09.2001
(73) Titulaire: LEGRIS S.A., F-35000 Rennes (FR)
(72) Inventeur: CORAI, Marion, F-35000 Rennes (FR)
(74) Mandataire: Robert, Jean-Pierre
(86) Numéro de dépôt international: FR9902803
(87) Numéro de publication internationale: WO00031454

(56) Documents cités:
- EP-A- 0 366 579
- CH-A- 682 942
- DE-A- 19 543 782
- DE-A- 19 650 601
- GB-A- 2 266 482
- US-A- 4 603 890

## Description

La présente invention concerne un dispositif de raccordement d'une conduite métallique à un organe à relier, utilisable notamment dans le circuit de carburant d'un véhicule automobile.

Dans les véhicules automobiles à moteur à combustion interne, le carburant est en général acheminé aux organes à alimenter par l'intermédiaire de conduites en matériau thermoplastique reliées entre elles ou auxdits organes par l'intermédiaire de dispositifs de raccordement également réalisés en matériau thermoplastique. De manière générale, le raccordement doit être étanche et apte à résister à des efforts de traction de la conduite selon des directions longitudinale et transversale de celle-ci, l'étanchéité ne devant pas être altérée du fait de l'application de ces efforts. Un tel dispositif de raccordement à une conduite thermoplastique comporte une section fonctionnelle destinée à être associée à une conduite ou à un organe à relier et une section de liaison de la section fonctionnelle à la conduite thermoplastique. La section de liaison est formée d'une partie mâle pourvue extérieurement de reliefs, par exemple en dents de sapin, et est destinée à être introduite à force dans une extrémité de la conduite. Ces éléments en matériau thermoplastique assurent un raccordement étanche et résistant et sont légers et de réalisation simple. Un dispositif de raccordement analogue figure dans le document DE 195 43 782.

Toutefois, dans certains types de moteurs tels que les moteurs à injection directe, la température du carburant transporté dépasse 130°C dans certaines zones du circuit. Il en résulte un échauffement global du carburant dans le circuit à une température à laquelle le matériau thermoplastique constituant les conduites n'a pas une tenue suffisante permettant à celles-ci d'assurer leur fonction. Des conduites métalliques, par exemple en aluminium, sont alors utilisées. Le raccordement d'une conduite métallique est réalisé par sertissage de la conduite sur la section de liaison d'un dispositif de raccordement. Les dispositifs de raccordement utilisés sont en matériau métallique, comme le laiton ou l'acier, et ont une section de liaison présentant des reliefs externes afin d'augmenter la résistance à l'arrachement de la conduite une fois celle-ci raccordée. La résistance mécanique d'un dispositif métallique de raccordement leur permet de supporter des efforts de sertissage importants qui provoquent une mise en contact étroit de la surface interne de la conduite avec la surface externe de la section de liaison du dispositif de raccordement. L'étanchéité du raccordement résulte de ce contact étroit. Les raccordements ainsi réalisés possèdent des caractéristiques satisfaisantes d'étanchéité et de résistance à l'arrachement. Cependant les éléments de raccord en matériau métallique sont lourds et relativement chers.

On a donc pensé à utiliser des dispositifs de raccordement en matériau thermoplastique ayant une forme analogue à celle des dispositifs de raccordement préalablement utilisés. Cependant, il a été estimé que la résistance mécanique des matériaux thermoplastique serait insuffisante pour empêcher que le dispositif de raccordement ne s'écrase sous l'effet de l'effort de sertissage et rendrait nécessaire d'introduire, préalablement au sertissage de la conduite, un mandrin dans le dispositif de raccordement afin de soutenir celui-ci et d'augmenter sa résistance aux efforts transversaux et donc à l'effort de sertissage. Il en résulterait une mise en oeuvre délicate, particulièrement pour les dispositifs de raccordement coudés dans lesquels il n'est pas possible d'introduire un mandrin préalablement au sertissage. L'idée d'employer des dispositifs de raccordement en matériau thermoplastique avec des conduites métalliques n'a donc pas été explorée.

Il est toutefois connu du document CH 682 942 un dispositif de raccordement comportant un embout en matière plastique destiné à être reçu dans une conduite tricouche comportant une couche intermédiaire métallique.

L'invention procède d'une analyse allant à l'encontre de ces préjugés et propose un dispositif de raccordement en matériau thermoplastique ayant une géométrie adaptée pour résister aux efforts de sertissage d'une conduite métallique.

A cet effet, on prévoit, selon l'invention, un dispositif de raccordement d'une conduite métallique, comportant une section fonctionnelle destinée à la connexion de la conduite métallique à un organe et une section de liaison de la section fonctionnelle à la conduite métallique, le dispositif de raccordement étant réalisé en matériau thermoplastique, la section de liaison étant tubulaire et s'étendant au-delà de la section fonctionnelle, la section de liaison comportant une portion cylindrique d'épaisseur sensiblement constante et pourvue extérieurement d'un élément d'étanchéité annulaire déformable divisant la portion cylindrique en deux parties de longueur au moins égale à une dimension de l'élément d'étanchéité parallèlement à une direction longitudinale de la portion cylindrique, et une portion d'accrochage s'étendant en décrochement radial par rapport à la portion cylindrique pour constituer un logement pour une portion déformée de la conduite métallique.

Cette géométrie permet à la section de liaison de résister à l'effort de sertissage de la conduite métallique et de conférer au raccordement une bonne étanchéité et une résistance élevée d'une part aux efforts de traction axiale et d'autre part aux efforts latéraux. En outre, la longueur minimale déterminée des deux parties de la portion cylindrique permet d'assurer une portée longitudinale suffisante de la conduite sertie sur la portion de guidage limitant une déformation ponctuelle de la conduite au niveau de l'élément d'étanchéité.

Avantageusement, les longueurs des parties de la portion cylindrique sont sensiblement égales. Les efforts exercés sur la portion de guidage, en particulier lors du sertissage de la conduite, sont ainsi également répartis de part et d'autre de l'élément d'étanchéité.

De préférence, la longueur de la portion cylindrique est sensiblement égale aux deux tiers de la longueur totale de la section de liaison. Le dispositif de raccordement ainsi réalisé permet d'optimiser à la fois la résistance à l'effort de sertissage et la résistance à l'arrachement.

Selon un mode de réalisation particulier, la portion d'accrochage s'étend entre la portion cylindrique et la section fonctionnelle.

Avantageusement, la section de liaison est une pièce de révolution, la portion d'accrochage comprenant alors de préférence un tronc de cône ayant une petite base formant le décrochement précité. La surface de liaison permet alors une relative liberté de rotation de la conduite métallique sertie sur le dispositif de raccordement autour de l'axe longitudinal de la conduite. Cette caractéristique permet de faciliter le montage ultérieur de la conduite dans le véhicule en permettant d'orienter celle-ci par rapport aux organes auxquels elle est raccordée. Cette orientation est réalisée sans altérer l'étanchéité assurée par l'élément d'étanchéité.

Selon une caractéristique particulière, l'élément d'étanchéité est un joint torique reçu dans une gorge s'étendant sensiblement au milieu de la portion cylindrique de manière à faire saillie par rapport à la surface extérieure de la portion cylindrique. Le dispositif de raccordement est alors de réalisation simple. Du fait de la disposition médiane de la gorge, les efforts s'exerçant, lors du sertissage de la conduite métallique, sur chaque partie de la portion cylindrique s'étendant de part et d'autre de la gorge sont équilibrés. On évite ainsi l'apparition de contraintes de cisaillement au niveau de la gorge.

D'autres caractéristiques et avantages de l'invention ressortiront à la lecture de la description qui suit d'un mode de réalisation particulier non limitatif de l'invention

Il sera fait référence aux dessins annexés, parmi lesquels :
- la figure 1 est une vue en élévation du dispositif de raccordement selon l'invention,
- la figure 2 est une vue analogue à la figure 1 du dispositif de raccordement, une conduite métallique, représentée en coupe longitudinale, ayant été sertie sur la section de liaison du dispositif de raccordement.

En référence aux figures, le dispositif de raccordement selon l'invention, généralement désigné en 1, comporte une section fonctionnelle 2 et une section de liaison 3 de la section fonctionnelle à une conduite métallique C réalisée par exemple en aluminium ou en cuivre. Le dispositif de raccordement peut être droit ou coudé.

Le dispositif de raccordement conforme à l'invention est réalisé par l'injection dans un moule d'un matériau thermoplastique comme un polyamide.

La section fonctionnelle 2 peut être une partie d'un organe à relier à la conduite métallique, tel qu'un réservoir, une pompe, ou autre, ou être une partie d'un embout que constitue le dispositif de raccordement, la section fonctionnelle comprenant alors des moyens de liaisons à un organe du type précité ou à une autre conduite en matériau thermoplastique, en métal, ou en élastomère.

La section de liaison 3 s'étend perpendiculairement en saillie d'une surface 4 de la section fonctionnelle 2 et a une longueur totale L.

La section de liaison 3 est une pièce de révolution tubulaire délimitant un canal interne ayant un diamètre de passage correspondant au débit souhaité du fluide dans le dispositif de raccordement.

La section de liaison 3 comporte, du côté de son extrémité libre, une portion cylindrique 5 ayant une longueur l. La longueur l est ici sensiblement égale aux deux tiers de la longueur totale L. L'épaisseur e de la portion cylindrique 5 est sensiblement constante sur toute la longueur l de ladite portion cylindrique 5. L'épaisseur e est déterminée de manière que la portion cylindrique 5 résiste aux efforts mis en jeu lors du sertissage de la conduite métallique C sur la section de liaison 3.

La portion cylindrique 5 est pourvue d'un chanfrein 6 s'étendant de façon adjacente à l'extrémité libre pour faciliter l'introduction de la section de liaison 3 dans la conduite C.

Une gorge 7 s'étend sensiblement au milieu de la portion cylindrique 5 pour recevoir un joint torique 8 partiellement en saillie radiale par rapport à la portion cylindrique 5 pour former un élément d'étanchéité compressible. La gorge 7 divise la portion cylindrique 5 en deux parties de longueur l' au moins égale à la largeur a de la gorge 7 correspondant à l'épaisseur du joint 8. La profondeur de la gorge 7 est calculée pour affaiblir au minimum la portion cylindrique 5. L'élément d'étanchéité peut également être réalisé en une seule pièce avec le dispositif de raccordement sous la forme d'un bourrelet d'étanchéité compressible s'étendant en saillie autour de la portion cylindrique 5. L'élément d'étanchéité peut comprendre une lèvre annulaire déformable s'étendant autour de la portion cylindrique en saillie de celle-ci. La lèvre annulaire est constituée par exemple de polyamide ou d'une autre matière plastique. Le dispositif de raccordement peut être réalisé en injection bi-matière, l'une du genre polyamide pour le corps même du dispositif et l'autre à base d'élastomère pour l'élément d'étanchéité. Un procédé d'injection séquentielle peut également être utilisé, le corps du dispositif et l'élément d'étanchéité étant alors tous deux en polyamide par exemple. L'élément d'étanchéité peut en outre s'étendre en toute position le long de la portion cylindrique 5.

Un tronc de cône 9 s'étend entre la surface 4 et la portion cylindrique 5 et se raccorde par sa petite base 10 à la portion cylindrique 5. La petite base 10 s'étend en décrochement radial par rapport à la portion cylindrique 5 de manière que le tronc de cône 9 forme une portion d'accrochage de la conduite. La petite base 10 peut éventuellement se raccorder à la portion cylindrique 5 par un prolongement cylindrique.

La grande base du tronc de cône 9 se raccorde à la surface 4 par une portion cylindrique supplémentaire 11 de diamètre externe D supérieur au diamètre externe d du joint 8. La portion cylindrique supplémentaire est facultative.

Les différentes portions de la section de liaison 3 se raccorderont préférentiellement les unes aux autres par des congés afin de limiter les zones d'amorce de rupture.

A titre d'exemple, le dispositif de raccordement pourra présenter les cotes suivantes : L = 30 mm, l = 13 mm, a = 2 mm, l' = 5,5 mm, e = 2 mm, D = 9,3 mm, d = 9,2 mm, diamètre de passage = 5 mm.

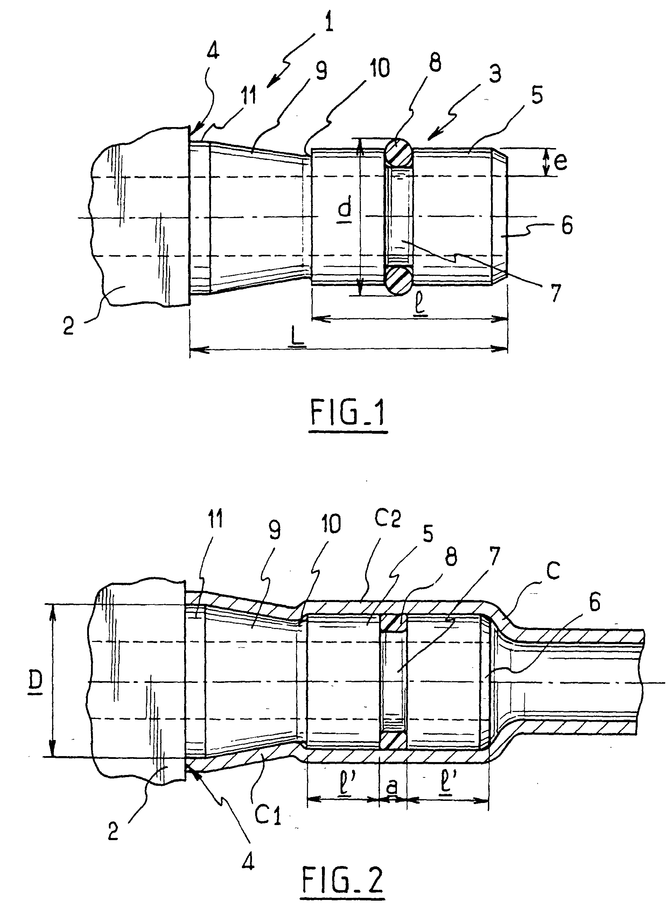

En référence plus particulièrement à la figure 2, préalablement à la mise en place de la conduite C sur le dispositif de raccordement, l'extrémité de conduite C est tulipée de manière que son diamètre interne soit légèrement supérieur au diamètre D. La section de liaison 3 est ensuite insérée dans ladite extrémité jusqu'à ce que celle-ci vienne en butée de la surface 4. La conduite C est alors soutenue par la portion cylindrique supplémentaire 11, ce qui centre celle-ci et en facilite le sertissage ultérieur. On notera que le tulipage de l'extrémité de la conduite C à un diamètre supérieur au diamètre externe d du joint 8 permet notamment d'éviter que le joint 8 ne soit accroché lors de l'introduction de la section de liaison 3 dans l'extrémité de la conduite C.

L'extrémité de la conduite C est ensuite sertie sur la section de liaison 3 par exemple par un procédé de sertissage magnétique dit de magnétostriction ou par un procédé de sertissage mécanique. La portion cylindrique 5 supporte alors la majeure partie de l'effort de sertissage appliqué sur la section de liaison 3 par l'intermédiaire de la conduite.

Après sertissage, l'extrémité de la conduite C épouse la forme de la section de liaison 3. Le tronc de cône 9 constitue alors un logement pour une portion déformée C1 de la conduite C. Une portion C2 de la conduite C vient en contact avec la portion cylindrique 5 et comprime le joint 8 assurant ainsi l'étanchéité de la liaison.

Bien entendu l'invention n'est pas limitée au mode de réalisation qui vient d'être décrit, mais englobe au contraire toute variante reprenant, avec des moyens équivalents, les caractéristiques essentielles énoncées plus haut.

En particulier, la section de liaison 3 peut être agencée de manière que la portion d'accrochage s'étende du côté de l'extrémité libre et la portion cylindrique s'étende entre la portion d'accrochage et la section fonctionnelle.

Bien que la section de liaison 3 ait été représentée sous-la forme d'une pièce de révolution, la section de liaison 3 peut présenter des portions polygonales.

## Revendications

1. Dispositif de raccordement d'une conduite métallique (C), le dispositif étant réalisé en matériau thermoplastique et comportant une section fonctionnelle (2) destinée à la connexion de la conduite à un organe et une section de liaison (3) de la section fonctionnelle à la conduite, la section de liaison étant tubulaire et s'étendant au-delà de la section fonctionnelle et la section de liaison comportant une portion cylindrique (5) pourvue extérieurement d'une gorge annulaire (7) équipée d'un élément d'étanchéité (8) annulaire déformable et une portion d'accrochage (9, 10) s'étendant en décrochement radial par rapport à la portion cylindrique pour constituer un logement pour une portion déformée (C1) de la conduite, **caractérisé en ce que** la portion cylindrique a une épaisseur (e) sensiblement constante en dehors de la gorge annulaire et **en ce que** la gorge annulaire divise la portion cylindrique (5) en deux parties de longueur (l ') au moins égale à une dimension dudit élément d'étanchéité parallèlement à une direction longitudinale de la portion cylindrique.

2. Dispositif de raccordement selon la revendication 1, **caractérisé en ce que** les longueurs (l') des parties de la portion cylindrique (5) sont sensiblement égales.

3. Dispositif de raccordement selon la revendication 1 ou la revendication 2, **caractérisé en ce que** la portion cylindrique (5) a une longueur (l) sensiblement égale aux deux tiers de la longueur (L) de la section de liaison (3).

4. Dispositif de raccordement selon l'une des revendications 1 à 3, **caractérisé en ce que** la portion d'accrochage (9, 10) s'étend entre la portion cylindrique (5) et la section fonctionnelle (2).

5. Dispositif de raccordement selon la revendication 4, **caractérisé en ce que** la section de liaison (3) est une pièce de révolution.

6. Dispositif de raccordement selon la revendication 5, **caractérisé en ce que** la portion d'accrochage comprend un tronc de cône (9) ayant une petite base (10) formant le décrochement précité.

7. Dispositif de raccordement selon la revendication 6, **caractérisé en ce que** la section de liaison (3) comprend une portion cylindrique additionnelle (11) s'étendant entre le tronc de cône (9) et la surface (4) de la section fonctionnelle (2) et ayant un diamètre (D) supérieur à un diamètre externe (d) de l'élément d'étanchéité (8) et qui correspond à un diamètre intérieur de la conduite avant sertissage.

8. Dispositif de raccordement selon l'une des revendications précédentes, **caractérisé en ce que** l'élément d'étanchéité est un joint torique (8) reçu dans une gorge (7) s'étendant sensiblement au milieu de la portion cylindrique (5) de manière à faire saillie par rapport à la surface extérieure de la portion cylindrique.

9. Dispositif de raccordement selon l'une des revendications précédentes, **caractérisé en ce que** la portion cylindrique (5) est chanfreinée du côté opposé à la portion d'accrochage (9, 10).

## Patentansprüche

1. Verbindungsvorrichtung für eine metallische Rohrleitung (C), wobei die Verbindungsvorrichtung aus einem thermoplastischen Material hergestellt ist und einen funktionellen Bereich (2), der dazu vorgesehen ist, die Verbindung der Rohrleitung mit einem Element herzustellen, und einen Verbindungsbereich (3) hat, der dazu vorgesehen ist, den funktionellen Bereich mit der Rohrleitung zu verbinden, und wobei der Verbindungsbereich rohrförmig ist und sich über den funktionellen Bereich hinaus erstreckt und einen zylindrischen Abschnitt (5) hat, der an seiner Außenseite mit einer ringförmigen Nut (7) versehen ist, die mit einem ringförmigen verformbaren Dichtungselement (8) ausgestattet ist, sowie einen Verankerungsabschnitt (9, 10), der relativ zu dem zylindrischen Abschnitt radial abgesetzt ist, um einen verformten Abschnitt (C1) der Rohrleitung aufzunehmen, **dadurch gekennzeichnet, daß** der zylindrische Abschnitt eine Dicke (e) hat, die außerhalb der ringförmigen Nut im wesentlichen konstant ist, und die ringförmige Nut den zylindrischen Abschnitt (5) in zwei Abschnitte mit der Länge (l') teilt, die zumindest gleich einer Abmessung des Dichtungselements parallel zu einer Längsrichtung des zylindrischen Abschnitts ist.

2. Verbindungsvorrichtung nach Anspruch 1, **dadurch gekennzeichnet, daß** die Längen (l') der Abschnitte des zylindrischen Abschnitts (5) im wesentlichen gleich sind.

3. Verbindungsvorrichtung nach Anspruch 1 oder 2, **dadurch gekennzeichnet, daß** der zylindrische Abschnitt (5) eine Länge (l) hat, die im wesentlichen gleich zwei Drittel der Länge (L) des Verbindungsbereichs (3) ist.

4. Verbindungsvorrichtung nach einem der Ansprüche 1 bis 3, **dadurch gekennzeichnet, daß** sich der Verankerungsabschnitt (9, 10) zwischen dem zylindrischen Abschnitt (5) und dem funktionellen Bereich (2) erstreckt.

5. Verbindungsvorrichtung nach Anspruch 4, **dadurch gekennzeichnet, daß** der Verbindungsbereich (3) ein Drehelement ist.

6. Verbindungsvorrichtung nach Anspruch 5, **dadurch gekennzeichnet, daß** der Verankerungsabschnitt einen Kegelstumpf (9) umfaßt, dessen kleine Basis (10) den oben genannten Absatz bildet.

7. Verbindungsvorrichtung nach Anspruch 6, **dadurch gekennzeichnet, daß** der Verbindungsbereich (3) einen zusätzlichen zylindrischen Abschnitt (11) umfaßt, der sich zwischen dem Kegelstumpf (9) und der Oberfläche (4) des funktionellen Bereichs (2) erstreckt und einen Durchmesser (D) hat, der größer ist als ein Außendurchmesser (d) des Dichtungselements (8) und der einem Innendurchmesser der Rohrleitung vor dem Zusammendrücken entspricht.

8. Verbindungsvorrichtung nach einem der vorhergehenden Ansprüche, **dadurch gekennzeichnet, daß** das Dichtungselement eine in einer Nut (7) aufgenomme torische Dichtung (8) ist, die sich im wesentlichen derart in der Mitte des zylindrischen Abschnitts (5) erstreckt, daß sie über die Außenfläche des zylindrischen Abschnitts hinaussteht.

9. Verbindungsvorrichtung nach einem der vorhergehenden Ansprüche, **dadurch gekennzeichnet, daß** der zylindrische Abschnitt (5) auf der dem Verankerungsabschnitt (9, 10) abgewandten Seite abgeschrägt ist.

## Claims

1. A connection device for connecting to a metal pipe (C), the device being made of a thermoplastic material and comprising a functional section (2) designed to connect the pipe to a member, and a connection section (3) for connecting the functional section to the pipe, the connection section being tubular and extending beyond the functional section, and the connection section comprising a cylindrical portion (5) provided on its outside with an annular groove (7) fitted with a deformable annular sealing element (8), and a catch portion (9, 10) set back radially relative to the cylindrical portion so as to constitute a housing for a deformed portion (C1) of the pipe, the device being **characterized in that** the cylindrical portion has a thickness (e) that is substantially constant outside the annular groove, and **in that** the annular groove divides the cylindrical portion (5) into two portions of length (ℓ') that is not less than a dimension of said sealing element parallel to a longitudinal direction of the cylindrical portion.

2. A connection device according to claim 1, **characterized in that** the lengths (ℓ') of the portions of the cylindrical portion (5) are substantially equal.

3. A connection device according to claim 1 or claim 2, **characterized in that** the cylindrical portion (5) has a length (ℓ) that is substantially equal to two thirds of the length (L) of the connection section (3).

4. A connection device according to any one of claims 1 to 3, **characterized in that** the catch portion (9, 10) extends between the cylindrical portion (5) and the functional section (2).

5. A connection device according to claim 4, **characterized in that** the connection section (3) is a body of revolution.

6. A connection device according to claim 5, **characterized in that** the coupling portion comprises a truncated cone (9) having a small base (10) forming the above-mentioned setback.

7. A connection device according to claim 6, **characterized in that** the connection section (3) comprises an additional cylindrical portion (11) extending between the truncated cone (9) and the surface (4) of the functional section (2), and having a diameter (D) that is greater than an outside diameter (d) of the sealing element (8), and which corresponds to an inside diameter of the pipe before crimping.

8. A connection device according to any preceding claim, **characterized in that** the sealing element is an O-ring (8) received in a groove (7) extending substantially in the middle of the cylindrical portion (5), the O-ring being received in such a manner as to project proud of the outer surface of the cylindrical portion.

9. A connection device according to any preceding claim, **characterized in that** the cylindrical portion (5) tapers at its end remote from the catch portion (9, 10).
